# EUROPEAN PATENT SPECIFICATION

(11) **EP 0 625 954 B1**
(45) Date of publication and mention of the grant of the patent: **18.09.1996**
(21) Application number: 93917420.7
(22) Date of filing: 10.02.1993
(51) Int. Cl.: B65G 65/48, B65D 88/28

(54) **ADJUSTABLE DOSING DEVICE FOR PULVERULENT MATERIAL**
REGELBARE DOSIERVORRICHTUNG FÜR PULVERFÖRMIGES MATERIAL
DISPOSITIF DE DOSAGE REGLABLE POUR MATIERES PULVERULENTES

(30) Priority: 19.02.1992 FI 920713
(43) Date of publication of application: 30.11.1994
(73) Proprietor: RAUTE PRECISION OY, SF-15800 Lahti (FI)
(72) Inventor: ÖRN, Kauno, SF-15860 Hollola 2 (FI)
(74) Representative: Haimelin, Jukka Ilmari
(86) International application number: FI9300035
(87) International publication number: WO9316946

(56) References cited:
- SE-B- 421 196
- US-A- 899 527
- US-A- 2 775 371
- US-A- 3 261 514
- US-A- 4 094 448
- US-A- 4 129 233
- US-A- 4 545 511
- US-A- 4 653 674

## Description

The invention relates to a disk feeder according to the preamble of claim 1 by means of which particulate, flowing material can be fed in a controlled manner through a mouth opening in a bottom cone of a vessel containing the material. The term controlled feeding is used in this connection to include both continuous feeding and intermittent feeding, and so that the term proportioning can also be used when referring to either of these functions. As a feeding device the equipment includes a rotating disc placed underneath the mouth opening in the bottom cone, which disk feeds the material flowing through the opening to an appropriate receiving device for further conductance. In order to regulate the amount of the material to be fed, the rotation speed of the disc can be adjusted and the device includes control and regulation elements functioning in conjunction with a flow opening formed at the mouth opening. The material guided onto the disk trough the mouth opening in the bottom cone is removed from the disk by a doctor blade placed downstream of the flow opening in the rotation direction of the disk.

The devices of the aforementioned kind are as their basic construction prior known (see for example US-A-3 261 514), and they can be considered to function properly in the proportioning of several kinds of flowing substances. However, when the said known art devices are used in controlled feeding, i.e. for proportioning substances which are difficult to handle, essential problems arise. There are basically two types of the aforementioned substances which are difficult to handle, namely those that flow with difficulty and those that flow too readily. Substances that flow with difficulty tend to come out of the flow opening unevenly, at times abundantly and at other times the flow may be interrupted. When handling readily-flowing substances, on the other hand, it is difficult to achieve a self blocking effect of the material flow when applying the intermittent proportioning; i.e. although the proportioning disk is at standstill, the substance tends to flow out of the flow opening and further over the proportioning disk to a discharge opening.

In accordance with the invention, the problems associated with these known art devices have been eliminated by dimensioning the diameter of the mouth opening of the out-flow part to be approximately half of the diameter of the proportioning disk and by placing the doctor blade in the direction of rotation of the proportioning disk at a distance of at least about half a rotation from the flow opening.

The said structural arrangement results firstly in that the substance flowing from the flow opening of the bottom cone forming the out flow part has a longer distance than hitherto over which to accumulate so that a readily flowing substance can form a barrier to its spontaneous flow and thus prevent the unintentional flowing of the substance over the proportioning disk in the standstill of the disk between the proportioning periods. On the other hand, during the proportioning event, with the proportioning disk rotating, the substance being proportioned is forced to travel along the disk for a distance essentially longer than is the case with previous structures as well as being forced to move, rolled along by the discharge doctor blade, in the direction of the disk's diameter for a longer distance. On being transferred radially towards the periphery, the peripheral velocity of the substance increases, and this, together with the doctor blade's rolling effect, causes accumulations possibly formed in the flow of material to collapse, and thereby results in a more uniform flow of the material.

The invention is presented in more detail by means of the appended drawing in which
Figure 1 illustrates a bottom cone forming the lower part of a vessel containing the substance to be fed, the mouth opening in the said cone being constructed in accordance with the invention,
Figure 2 illustrates a proportioning disk,
Figure 3 illustrates an enclosure structure for enclosing the bottom cone and the proportioning disk, and
Figure 4 illustrates the mutual arrangement of the proportioning disk, the mouth opening in the vessel and the enclosure structure.

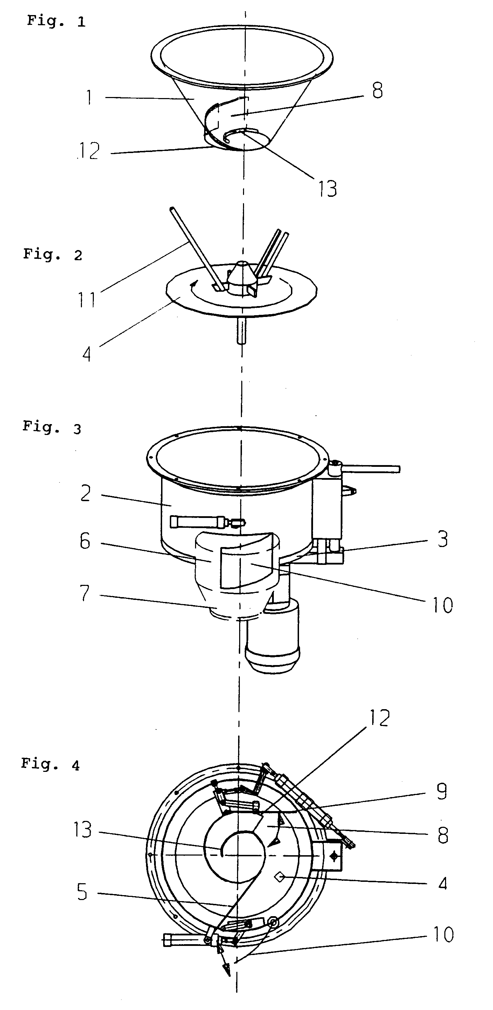

In Figure 1, reference number 1 points to a conical lower part of a vessel whose mouth opening has been constructed to form an out flow opening 8 defined underneath by a proportioning disk 4 according to Figure 2 and placed to abut against the conical lower part. The inside edge of the out-flow opening is formed by the mantle of the conical part, the bottom edge of the said mantle having a low guiding rim 13. The said guiding rim projects spirally inwards from the out flow opening by about a quadrant, and approaches the centre of the conical part. Likewise, the outside edge of the out-flow opening 8 has been constructed to form a spirally outwards opening guiding structure 12 whereupon the inside and outside guides define between them a flow route widening spirally in the rotation direction of the proportioning disk 4.

In accordance with one of the invention's fundamental characteristics, the diameter of the mouth opening of the conical part 1 is no more than half of the diameter of the proportioning disk 4. Another fundamental characteristic of the invention becomes evident from Figure 4, in which the doctor blade 5 is placed at a distance of approximately half a rotation from the out flow opening 8. The said distance may be considered as being the minimum distance for ensuring a flow route that results in sufficient evening of flow along the proportioning disk 4 for the substance being proportioned. While the doctor blade may be placed even slightly further away from the discharge opening, placing it too far within the area of the external spiral guide 12 is not recommended.

An optional feature of the invention is illustrated in Figure 2 where loosening elements 11 have been mounted onto the proportioning disk. The said elements make it possible to enhance the efficiency of the device when dealing with difficult-to-handle substances. The loosening elements have been mounted onto a vertically oriented extension of the rotation axle of the proportioning disk. The said extension has been made sufficiently long to enable the elements 11 to be mounted to rotate with the disk 4 above the spiral structure 13. The said arrangement means that the said elements 11 must be mounted internally via the cone 1 onto the disk already in position. The purpose of the elements 11 is to disrupt hangings of material at the bottom of the cone 1 and to reduce in size possible material accumulations so that the material can pass through the out-flow opening 8.

An essentially cylindrical enclosure can advantageously be mounted onto the outside of the cone 1, the base of the said enclosure extending to the same level as the edge of the mouth opening 1 of the conical vessel. A proportioning disk 4 in accordance with Figure 2 is mounted onto the mouth opening 3 of the bottom part of the cylindrical enclosure 2 so that the disk covers the mouth opening 3 and extends slightly beyond its edges. An operation clearance is required between the bottom edge of the cylindrical enclosure 2 and the stationary proportioning disk 4.

The proportioning disk 4 is provided with a drive mechanism by means of which the rotation speed of the disk can be regulated. In this way the device's feeding capacity can be changed by changing the speed of rotation of the disk 4, by using a check plate to adjust the size of the out flow opening 8, or by using the above two measures in combination. In practice, the device has given feed capacities within the range of 15 - 5000 kg/h.

## Claims

1. A device for controlled feeding of particulate material, the said device consisting of a conical out flow part (1) of a vessel containing the material to be fed, a proportioning disk (4) placed underneath the mouth opening of the out flow part with an operation clearance and rotatable around an axle essentially coaxial with the axis of the out flow part (1), a flow guiding structure (12) formed at the mouth opening of the out flow part (1), the flow guiding structure opening spirally in the rotation direction of the proportioning disk (4) and thereby forming an out flow opening (8), and a doctor blade (5) placed away from the out flow opening (8) in the rotation direction of the disk for the purpose of removing the material from the disk, **characterised in that** the diameter of the mouth opening of the out flow part (1) is less than approximately half of the diameter of the proportioning disk (4), and that the doctor blade (5) is placed at a distance of at least approximately half a rotation downstream of the out flow opening (8) in the rotation direction of the proportioning disk (4).

2. A device as claimed in claim 1, **characterised in that** the proportioning disk (4) is equipped with loosening elements (11) rotating along with the proportioning disk and extending into the conical out flow part (1).

## Patentansprüche

1. Vorrichtung zur kontrollierten Zulieferung von partikelförmigem Material, welche Vorrichtung aus einem kegelförmigen Ausflußteil (1) eines Gefäßes, welches das zuzuliefernde Material enthält, einer unterhalb der Mündungsöffnung des Ausflußteiles mit einem Arbeitsabstand angeordneten Dosierscheibe (4), die um eine Achse drehbar ist, die im wesentlichen mit der Achse des Ausflußteiles (1) koaxial ist, einer Flußführungsstruktur (12), die an der Mündungsöffnung des Ausflußteiles (1) gebildet ist, welche Flußführungsstruktur sich spiralförmig in Drehrichtung der Dosierscheibe (4) öffnet und dadurch eine Ausflußöffnung (8) bildet, und einem Abstreifmesser (5) besteht, das von der Ausflußöffnung (8) in Drehrichtung der Scheibe entfernt zum Zweck des Entfernens des Materials von der Scheibe angeordnet ist, dadurch gekennzeichnet, daß der Durchmesser der Mündungsöffnung des Ausflußteiles (1) kleiner ist als annähernd die Hälfte des Durchmessers der Dosierscheibe (4) und daß das Abstreifmesser (5) in einem Abstand von mindestens annähernd einer halben Umdrehung stromabwärts der Ausflußöffnung (8) in der Drehrichtung der Dosierscheibe 4 angeordnet ist.

2. Vorrichtung nach Anspruch 1, dadurch gekennzeichnet, daß die Dosierscheibe (4) mit Auflockerungselementen (11) versehen ist, die mit der Dosierscheibe gemeinsam umlaufen und sich in den kegelförmigen Ausflußteil (1) erstrecken.

## Revendications

1. Dispositif pour la fourniture contrôlée de matériau en particules, ledit dispositif étant constitué d'une partie conique (1) de décharge d'un récipient contenant le matériau à fournir, d'un disque de dosage (4) placé en dessous de l'embouchure de la partie de décharge avec un interstice de travail et pouvant tourner autour d'un axe essentiellement coaxial à l'axe de la partie (1) de décharge, d'une structure (12) de guidage de l'écoulement formée à l'embouchure de la partie (1) de décharge, la structure de guidage de l'écoulement s'ouvrant en spirale dans le sens de la rotation du disque de dosage (4) et formant ainsi une ouverture (8) de décharge, et d'une lame racleuse (5) disposée à l'écart de l'ouverture (8) de décharge dans le sens de rotation du disque, pour enlever le matériau du disque, caractérisé en ce que le diamètre de l'embouchure de la partie (1) de décharge est inférieur à environ la moitié du diamètre du disque de dosage (4), et en ce que la lame racleuse (5) est disposée à une distance d'au moins environ un demi-tour en aval de l'ouverture (8) de décharge dans le sens de rotation du disque de dosage (4).

2. Dispositif selon la revendication 1, caractérisé en ce que le disque de dosage (4) est équipé d'éléments d'ameublissement (11) tournant en même temps que le disque de dosage et s'étendant à l'intérieur de la partie conique (1) de décharge.
